(19) Europäisches Patentamt
European Patent Office
Office européen des brevets

(11) EP 1 857 342 B1

(12) EUROPÄISCHE PATENTSCHRIFT

(45) Veröffentlichungstag und Bekanntmachung des Hinweises auf die Patenterteilung:
**10.12.2008 Patentblatt 2008/50**

(51) Int Cl.:
***B61G 5/02*** *(2006.01)*

(21) Anmeldenummer: **06120393.1**

(22) Anmeldetag: **08.09.2006**

(54) **Kupplungsvorrichtung mit Überlastsicherungsglied**

Coupling arrangement with overload security device

Dispositif d'accouplement avec dispositif de sécurité antisurcharge

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.05.2006 EP 06114177**

(43) Veröffentlichungstag der Anmeldung:
**21.11.2007 Patentblatt 2007/47**

(73) Patentinhaber: **Voith Turbo Scharfenberg GmbH & Co. KG**
**38239 Salzgitter-Watenstedt (DE)**

(72) Erfinder: **Busch, Dietmar**
**Voith Turbo Scharfenberg GmbH&Co.KG**
**30880 Laatzen-Rethen (DE)**

(74) Vertreter: **Rupprecht, Kay**
**Meissner, Bolte & Partner GbR**
**Widenmayerstrasse 48**
**80538 München (DE)**

(56) Entgegenhaltungen:
**EP-A1- 1 371 539**       **WO-A-20/05023618**
**CH-A- 452 586**         **FR-A1- 2 775 240**

EP 1 857 342 B1

**Beschreibung**

Die vorliegende Erfindung betrifft eine Kupplungsvorrichtung zum Übertragen von Zug- und/oder Stoßkräften zwischen zwei benachbarten Wagenkästen eines mehrgliedrigen Fahrzeuges, insbesondere eines Schienenfahrzeuges, wobei die Kupplungsvorrichtung eine Kupplungsstange aufweist, welche an ihrem ersten Endabschnitt einen Kupplungskopf aufweist, und welche an ihrem zweiten Endabschnitt über einen Lagerbock mit einem ersten Wagenkasten vorzugsweise gelenkig verbunden ist, wobei der Kraftfluss bei einer Übertragung von Zug- und/oder Stoßkräften von dem ersten Wagenkasten zu einem benachbarten zweiten Wagenkasten im wesentlichen über die Kupplungsstange verläuft, und wobei die Kupplungsvorrichtung ferner zumindest einen Überlastsicherungsglied aufweist, welches in dem über die Kupplungsstange übertragenen Kraftfluss angeordnet ist, und welches ausgelegt ist, bei Überschreiten eines mit dem durch das Überlastsicherungsglied fließenden Kraftfluss übertragenen ersten Energiebetrages anzusprechen und seine Funktion als Kraftübertragungselement zu verlieren, wodurch sich der Kupplungskopf und der erste Wagenkasten relativ aufeinander zu bewegen und der Kupplungskopf aus seiner Normalstellung in Richtung des ersten Wagenkastens eingefahren wird.

Die Druckschrift WO 2005/ 023618 A1 betrifft eine Kupplungsanordnung mit einem Kollisionsschutz. Der Kollisionsschutz wird bei dieser bekannten Anordnung über Deformationsrohre bereitgestellt, welche sich im Crashfall unter Querschnittsverringerung plastisch verformen und dabei Energie absorbieren.

Die Druckschrift FR 2 775 240 A1 beschreibt eine weitere aus der Schienenfahrzeugtechnik bekannte Stoßsicherung, die in erster Linie bei Seitenpuffern einsetzbar ist. Diese Stoßsicherung umfasst einen Elastomerkörper zum Absorbieren der im normalen Fahrbetrieb auftretenden Stöße. Darüber hinaus ist ein wabenförmig aufgebautes destruktives Energieverzehrelement vorgesehen. Das Ansprechen dieses destruktiven Energieverzehrelementes erfolgt über eine Überlastsicherung. Die Überlastsicherung ist als kegelstumpfförmiges Rohr ausgebildet, das zwischen der Stirnseite des Wagenkastens einerseits und der Wagenkastenseitigenplatte des Elastomerkörpers eingespannt ist. Beim Überschreiten einer für den Elastomerkörper zulässigen Energie spricht die Überlastsicherung an, und zwar indem das kegelstumpfförmige Rohr in einer nicht-elastischen und irreversiblen Art zerstört wird.

Aus der Druckschrift EP 1 371 539 A1 ist eine Kupplungsanordnung mit einem Energieverzehr-/Kraftübertragungsglied bekannt, welches zwischen dem Kupplungskopf und dem Wagenkasten angeordnet ist und zum Übertragen von Zug- und/oder Schubkräften dient. Damit dieses (regenerativ ausgeführte) Energieverzehr-/Kraftübertragungsglied bei Bedarf aktiviert und deaktiviert werden kann, ist ein Bypassglied vorgesehen, um eine Kraftflussüberbrückung über das Energieverzehrglied bereitzustellen.

Die Druckschrift CH 452 586 A betrifft eine Zug- und Stoßvorrichtung an einem Fahrzeugunterbau eines Schienenfahrzeuges. Zum Bereitstellen einer Stoßsicherung, die beim Überschreiten einer bestimmten Druckkraft anspricht und einen Teil der übertragenen Energie absorbiert, ist ein als Zerstörungsglied ausgebildetes Druckteil zwischen dem Fahrzeugunterbau und der Kupplungsstange angeordnet, wobei dieses Druckteil bei Einwirkung einer charakteristischen Druckkraft durch Verformung zerstört wird.

Kupplungsvorrichtungen der eingangs genannten Art sind somit dem Prinzip nach aus dem Stand der Technik bekannt und werden beispielsweise in der Schienenfahrzeugtechnik als Stoßsicherung eingesetzt. In der Regel besteht eine solche Stoßsicherung aus einer Kombination aus einer Zug-/Stoßeinrichtung (Federapparat) und einer Energieverzehrvorrichtung, wobei die Stoßsicherung das Fahrzeug insbesondere auch bei größeren Auffahrtgeschwindigkeiten schützt. Dabei kann beispielsweise vorgesehen sein, dass die Zug-/Stoßeinrichtung ausgelegt ist, Zug- und Stoßkräfte bis zu einer definierten Größe aufzunehmen und darüber hinausgehende Kräfte in das Fahrzeuguntergestell weiterzuleiten. Dadurch werden zwar Zug- und Stoßkräfte, welche während des normalen Fahrbetriebes, beispielsweise bei einem mehrgliedrigen Fahrzeug, zwischen einzelnen Wagenkästen auftreten, in dieser in der Regel regenerativ ausgebildeten Stoßsicherung absorbiert, bei Überschreiten der Betriebslast der Zug-/Stoßeinrichtung hingegen, etwa beim Aufprall des Fahrzeuges auf ein Hindernis oder bei einem abrupten Abbremsen des Fahrzeuges, wird die Stoßsicherung und die gegebenenfalls zwischen den einzelnen Wagenkästen vorgesehene Gelenkverbindung möglicherweise zerstört oder beschädigt. In diesem Fall reicht die Zug-/Stoßeinrichtung nicht für einen Verzehr der anfallenden Energie aus. Deshalb ist in einem Crash-Fall die Stoßsicherung in das Energieverzehrkonzept des Gesamtfahrzeuges einzubinden, so dass die anfallende Stoßenergie direkt im Fahrzeuguntergestell aufgenommen wird. Sonst wird dieses extremen Belastungen ausgesetzt und unter Umständen beschädigt oder gar zerstört. Bei Schienenfahrzeugen läuft in solch einem Fall der Wagenkasten Gefahr, zu entgleisen.

Mit dem Ziel, das Fahrzeuguntergestell gegen Beschädigungen bei starken Auffahrstößen zu schützen, kommt häufig ein destruktiv oder regenerativ ausgebildetes Energieverzehrelement zum Einsatz, welches beispielsweise derart ausgelegt ist, dass es erst nach Ausschöpfung des Arbeitsverzehrs der Zug-/Stoßeinrichtung anspricht und die durch den Kraftfluss über das Energieverzehrelement übertragene Energie zumindest teilweise absorbiert und somit abbaut. Als Energieverzehrelemente kommen beispielsweise Verformungsrohre in Frage, bei denen in destruktiver Weise durch eine definierte Verformung zumindest eines Abschnittes der Verformungsrohre die Stoßenergie in Verformungsarbeit und Wärme umgewandelt wird.

Ein Energieverzehrelement, welches auf dem Prinzip eines Verformungsrohrs basiert, zeichnet sich dadurch aus, dass es eine definierte Ansprechkraft ohne Kraftspitzen aufweist. Jedoch sind aus dem Stand der Technik auch regenerativ ausgebildete Energieverzehrelemente bekannt. Ein Beispiel hierfür sind gashydraulische Puffer mit einer regenerativen bzw. selbstrestaurierenden Arbeitsweise. Energieverzehrelemente, die auf einer gashydraulischen Arbeitsweise basieren, haben in der Regel eine geringe Ansprechkraft und Vorspannung und reagieren - im Gegensatz zu einem Verformungsrohr - geschwindigkeitsabhängig.

Neben Energieverzehrelementen, die auf einer gashydraulischen Arbeitsweise basieren, sind auch Energieverzehrelemente bekannt, die auf einer hydrostatischen Arbeitsweise basieren, und die ebenso regenerativ (selbstrestaurierend) wirken. Hydrostatisch arbeitende Energieverzehrelemente haben im Gegensatz zu gashydraulisch arbeitenden Energieverzehrelemente eine hohe Ansprechkraft und Vorspannung.

Aus dem Stand der Technik sind beispielsweise Kupplungsvorrichtungen mit integrierten Energieverzehrvorrichtungen bekannt, bei denen ein Verformungsrohr zum Einsatz kommt. Derartige Energieverzehrvorrichtung weisen beispielsweise ein erstes Kraftübertragungselement und ein zweites Kraftübertragungselement auf, die mit Hilfe eines Energieverzehrelementes (Verformungsrohr) derart kraftschlüssig miteinander verbunden sind, dass Zug- und Stoßkräfte in Längsrichtung der Kupplungsvorrichtung übertragbar sind. Bei der Übertragung der Zug- und Stoßkräfte läuft der Kraftfluss von dem ersten Kraftübertragungselement zu dem zweiten Kraftübertragungselement im wesentlichen vollständig über das als Energieverzehrelement ausgebildete Verformungsrohr. Das Verformungsrohr selbst ist derart ausgelegt, dass bei Überschreiten eines durch den Kraftfluss über das Verformungsrohr übertragenen Energiebetrages eine plastische Verformung des Elementes stattfindet, so dass die Kraftübertragungselemente relativ zueinander in Längsrichtung der Energieverzehrvorrichtung verschoben werden, wodurch infolge der destruktiven Verformung des Verformungsrohres zumindest ein Teil des übertragenen Energiebetrages von dem Energieverzehrelement absorbiert und in Verformungsarbeit und Wärme umgewandelt und somit abgebaut wird. Durch das Verschieben der Kraftübertragungselemente relativ zueinander in Längsrichtung der Energieverzehrvorrichtung kann des Weiteren eine Verkürzung der in der Kupplungsvorrichtung zum Einsatz kommenden Kupplungsstange auftreten. In solch einem Fall würde des Weiteren nach Ansprechen der Energieverzehrelemente der am Kopfende der Kupplungsstange angeordnete Kupplungskopf aus seiner Normalstellung in Richtung des Wagenkastens eingefahren werden. Unter dem Begriff "Normalstellung" des Kupplungskopfes ist hierin die Position des Kupplungskopfes im Hinblick auf die Stirnseite des zugeordneten Wagenkastens im normalen Fahrbetrieb zu verstehen.

Eine derartige Energieverzehrvorrichtung weist eine im wesentlichen rechteckig verlaufende Kennlinie auf, wodurch nach dem Ansprechen des Energieverzehrelementes eine maximale Energieaufnahme sichergestellt ist.

Allerdings ist es nicht möglich, eine Kupplungsvorrichtung mit integrierter Energieverzehrvorrichtung, in welcher ein destruktiv ausgebildetes Energieverzehrelement (z.B. ein Verformungsrohr) zum Einsatz kommt, und welche somit eine durch das Energieverzehrelement vorgegebene, in der Regel rechteckige Kennlinie aufweist, an bestimmte Anwendungen, insbesondere im Hinblick auf das Ansprechverhalten der Energieverzehrvorrichtung sehr genau anzupassen. Hierzu ist es erforderlich, die Kraft-Weg-Kennlinie der Energieverzehrvorrichtung entsprechend auszulegen, um einen vorhersehbaren, definierten Energieverzehr zu ermöglichen.

Aber auch Energieverzehrvorrichtungen, in welchen ein hydrostatisch arbeitendes Energieverzehrelement zum Einsatz kommt, und welche von daher eine im wesentlichen linear steigende Kennlinie aufweisen, sind für viele Anwendungen häufig nicht geeignet, da von Natur aus die maximale Energieaufnahme der entsprechenden Energieverzehrelemente oftmals zu gering ist.

Insbesondere besteht bei vielen Anwendungen ein Bedarf dahingehend, in Kupplungsvorrichtungen eine Energieverzehrvorrichtung einzusetzen, die sich einerseits durch eine maximale Energieaufnahme und andererseits durch eine vorab genau festlegbare Ansprechkraft bzw. durch einen genau festlegbaren übertragenen Energiebetrag (zweiter Energiebetrag) auszeichnet, um somit insbesondere in einem Crash-Fall einen vorhersehbaren und wohl definierten Energieverzehr zu ermöglichen. So ist es oftmals erwünscht, dass die Energieverzehrvorrichtung erst bei einer erhöhten Ansprechkraft aktiviert wird, d.h. zumindest einen Teil der durch den Kraftfluss über die Kupplungsvorrichtung übertragenen Energie absorbiert, wobei allerdings das Ansprechen der Energieverzehrvorrichtung auf einfache Weise vorab festlegbar ist.

Um diese Aufgabe zu lösen, wäre es denkbar, in einer Kupplungsvorrichtung eine Energieverzehrvorrichtung vorzusehen, in welcher ein herkömmlich ausgebildetes, insbesondere destruktiv arbeitendes Energieverzehrelement, wie zum Beispiel ein Verformungselement, integriert ist, und welche sich - infolge der für solche Energieverzehrelemente charakteristischen rechteckigen Kennlinie - durch eine maximale Energieaufnahme auszeichnet, wobei des weiteren quer zur Kraftrichtung platzierte Überlastsicherungsglieder in Gestalt von Abreißelementen vorgesehen sind, die bei Überschreiten einer über die Überlastsicherungsglieder bzw. Abreißelemente übertragenen und für das Auslösen der Überlastsicherungsglieder charakteristischen Energie (erster Energiebetrag) das Auslösen der Energieverzehrelemente ermöglichen.

Hierin ist unter dem Begriff "zweiter Energiebetrag" grundsätzlich die durch Zug- oder Stoßkräfte anfallende, über die Kupplungsvorrichtung übertragene charakteristische Energie zu verstehen, bei welcher das Energieverzehrelement anspricht und die anfallende Energie zumindest teilweise absorbiert. An dieser Stelle sei darauf hingewiesen, dass bei der erfindungsgemäßen Kupplungsanordnung das Energieverzehrelement vor seinem Ansprechen nicht notwendigerweise als Kraftübertragungsglied fungieren muss, welches nach Überschreiten des zweiten Energiebetrages seine Kraftübertragungsfunktion verliert; vielmehr ist es auch denkbar, dass das Energieverzehrelement vor seinem Ansprechen keinerlei Kraftübertragungsfunktion zukommt. Dies wäre beispielsweise dann der Fall, wenn das Energieverzehrelement kraftfrei und/oder mit Spiel in der Kupplungsanordnung angeordnet ist.

Gleichermaßen ist unter dem Begriff "erster Energiebetrag" grundsätzlich die durch Zug-oder Stoßkräfte anfallende, über die Kupplungsvorrichtung übertragene charakteristische Energie zu verstehen, bei welcher das Überlastsicherungsglied anspricht bzw. die Überlastsicherungsglieder ansprechen und somit die Funktion als Kraftübertragungsglied verlieren und das Ansprechen des Energieverzehrelements initiieren.

Ferner haben herkömmliche Lösungen, bei welchen Abreißelemente als Überlastsicherungsglieder zum Zwekke des Initiieren des Ansprechens eines Energieverzehrelements eingesetzt werden, den Nachteil, dass die für das Versagen der zum Einsatz kommenden Abreißelemente charakteristische Kraft bzw. Energie in erster Linie durch den Festigkeitswert des für die Abreißelemente eingesetzten Materials abhängt. Die Festigkeit ist eine Werkstoffeigenschaft, die den mechanischen Widerstand beschreibt, den ein Werkstoff einer Formänderung entgegensetzt. Allerdings hängt die Festigkeit eines Werkstoffes insbesondere vom Werkstoffzustand, der Temperatur, der Belastung und der Belastungshistorie ab. Im Hinblick auf das Ansprechverhalten der Abreißelemente bedeutet dies, dass sich die hierfür charakteristische Kraft bzw. Energie ändern kann.

Auch aus diesem Grund ist ein durch das Versagen der Abreißelemente initiiertes Ansprechen eines Energieverzehrelements vorab nur mit gewissen Unsicherheiten festlegbar, so dass der Ereignisverlauf des Energieverzehrs bei Überschreiten der Betriebslast nicht genau vorhersehbar ist.

Auf der Grundlage der geschilderten Problemstellung liegt der vorliegenden Erfindung nun die Aufgabe zugrunde, eine Kupplungsvorrichtung der eingangs genannten Art derart weiterzubilden, dass ein Ansprechen des zum Einsatz kommenden zumindest einen Überlastsicherungsgliedes vorab möglichst genau festlegbar ist, infolgedessen der Ereignisverlauf des Energieverzehrs bei Überschreiten der Betriebslast ebenfalls möglichst genau vorhersehbar ist.

Diese Aufgabe wird mit einer Kupplungsvorrichtung gemäß Anspruch 1 gelöst.

Insbesondere zeichnet sich die erfindungsgemäße Lösung dadurch aus, dass beispielsweise zum Initiieren des Auslösens eines in der Kupplungsvorrichtung vorgesehenen Energieverzehrelements oder zum Initiieren des Einfahrens des Kupplungskopfes aus seiner Normalstellung in Richtung des zugeordneten Wagenkastens ein Überlastsicherungsglied eingesetzt wird, welches nahezu unabhängig von dem Festigkeitswert des für das Überlastsicherungsglied eingesetzten Materials ist. Das gezielte, kraftgesteuerte Ansprechen des zumindest einen Überlastsicherungsgliedes in der erfindungsgemäßen Kupplungsvorrichtung kann somit durch eine geeignete Wahl der geometrischen Abmessung des Überlastsicherungsgliedes bzw. der Geometriekennwerte des Gliedes vorab festgelegt werden, wodurch der für das Ansprechen des Überlastsicherungsgliedes charakteristische Energiebetrag (erster Energiebetrag) vorab sehr genau bestimmt werden kann. Der erste Energiebetrag ist in erheblich geringerem Maß als für andere Lösungen von dem Werkstoffzustand, der Temperatur, der Belastung oder der Belastungshistorie des für das Überlastsicherungsglied verwendeten Werkstoffes abhängig. Insbesondere ist der erste Energiebetrag, bei welchem das Überlastsicherungsglied anspricht, ebenso in erheblich geringerem Maß abhängig von Festigkeitsschwankungen des verwendeten Materials. Dadurch ist eine genauere Einstellung der Ansprechkraft des Überlastsicherungsgliedes möglich.

Unter dem hiermit verwendeten Begriff "Geometriekennwert" sind allgemein geometriebedingte Flächenmomente n-ten Grades (n = 0, 1, 2, ...) zu verstehen. Insbesondere handelt es sich bei dem Geometriekennwert des Überlastsicherungsgliedes nicht um ein aus der Werkstofftechnik bekannter Materialkennwert, wie etwa der Elastizitätsmodul, der den Zusammenhang zwischen Spannung und Dehnung bei Verformung eines festen Körpers mit elastischem Verhalten beschreibt. Vielmehr ist der Geometriekennwert ein vom Materialkennwert unabhängiger Wert. Als Geometriekennwert kommen insbesondere Querschnittskennwerte bzw. Flächenmomente, das Widerstandsmoment und/oder die Länge des Sicherungsgliedes in Frage.

Die Flächenmomente n-ten Gerades sind allgemein durch die nachfolgende Gleichung charakterisiert:

$$\int_A y^{n-i} z^i \, dA \qquad \text{mit} \qquad 0 \le i \le n \qquad \text{(Gleichung 1)},$$

wobei A die Querschnittsfläche des Überlastsicherungsgliedes, y die Koordinate in y-Richtung und z die Koordinate in z-Richtung beschreibt. Sinngemäß entspricht das Flächenmoment 0-ten Grades der Querschnittsfläche, während das Flächenmoment 1-ten Grades als "statisches Moment" und das Flächenmoment 2-ten Grades als "Flächenträgheitsmoment" bezeichnet werden.

Anders ausgedrückt bedeutete dies, dass der erste für das Ansprechen des zumindest einen Überlastsicherungsgliedes charakteristische Energiebetrag nach der erfindungsgemäßen Lösung durch eine geeignete Wahl der Querschnittsfläche (Flächenmoment 0-ten Grades), des statischen Moments (Flächenmoment 1-ten Grades) und/oder durch eine geeignete Wahl des Flächenträgheitsmoments (Flächenmoment 2-ten Grades) vorab genau festlegbar ist.

Das Widerstandsmoment hingegen ist ein Maß dafür, wie sehr allgemein ein Körper durch eine äußere Last beansprucht wird. Das Widerstandsmoment steht in enger Beziehung zum Flächenmoment 2-ten Grades (Flächenträgheitsmoment), welches seinerseits den Widerstand gegen Durchbiegung unter einer äußeren Last und die Geometrie der Schnittfläche in Verbindung bringt. Beim Widerstandsmoment wird zusätzlich berücksichtigt, dass die Belastung auch noch innere Spannungen im Körper erzeugt.

Da das Widerstandsmoment eines Körpers allgemein durch das Verhältnis aus dem Flächenträgheitsmoment zu dem Abstand der so genannten "neutralen Faser" im Körper definiert wird, ist es möglich, durch eine geeignete Geometrie des Überlastsicherungsgliedes und somit durch eine geeignete Positionierung der neutralen Faser im Körper des Überlastsicherungsgliedes das Widerstandsmoment des Überlastsicherungsgliedes und somit den ersten für das Überlastsicherungsglied charakteristischen Energiebetrag vorab festzulegen. Die neutrale Faser entspricht der Linie innerhalb des Überlastsicherungsgliedes, in der keine mechanische Spannung vorliegt.

Das Widerstandsmoment kann in eine axiale, biaxiale und polare Komponente eingeteilt werden. Dabei ist das axiale Widerstandsmoment ein Maß für die Beanspruchung des Körpers bei einer Belastung auf Biegung. Das biaxiale Widerstandsmoment ist ein Maß für die Beanspruchung des Körpers, der außerhalb seiner Symmetrieachse belastet wird und der sich unter Last zusätzlich verdrillt. Hingegen ist das polare Widerstandsmoment ein Maß für die Beanspruchung des Körpers, die bei einer Belastung auf Torsion entsteht.

Vorteilhafte Weiterentwicklungen sind in den Unteransprüchen angegeben.

Bei einer besonders bevorzugten Weiterentwicklung der erfindungsgemäßen Kupplungsvorrichtung ist vorgesehen, dass die Kupplungsstange nach dem Ansprechen des zumindest einen Überlastsicherungsgliedes zumindest teilweise aus dem zwischen den benachbarten Wagenkästen übertragenen Kraftfluss genommen wird. Durch die Verwendung der Überlastsicherung zum Initiieren eines Einfahrens des Kupplungskopfes aus seiner Normalstellung in Richtung des ersten Wagenkastens bei Überschreiten der Betriebslast der Kupplungsvorrichtung kann erreicht werden, dass beispielsweise in einem Crash-Fall der Kupplungskopf und die Kupplungsstange zumindest teilweise aus dem zwischen den benachbarten Wagenkästen übertragenen Kraftfluss gedrückt werden, wobei dann beispielsweise wagenkastenseitig vorgesehene Energieaufnahmeelemente zum Einsatz kommen können, um die übertragene Stoßenergie zuverlässig abzubauen. Damit wird ein maximal erreichbarer und insbesondere kalkulierbarer Energieverzehr bei einem vorhersehbaren Ereignisablauf erreicht. Dadurch, dass erfindungsgemäß die Überlastsicherung in der Kupplungsvorrichtung integriert ist, ist es nun nicht mehr notwendig, externe Abscherelemente einzusetzen.

Denkbar wäre es beispielsweise, dass in einer Anschraubplatte des Wagenkastens, an welcher der Lagerbock bzw. der zweite Endabschnitt der Kupplungsstange angelenkt ist, eine Öffnung aufweist, durch die nach Ansprechen der Überlastsicherung die Kupplungsstange bzw. die Kupplungsstange zusammen mit dem Lagerbock zumindest teilweise gedrückt werden und somit aus dem Kraftfluss genommen werden. Durch die gegebenenfalls im Lagerbock bzw. in der Anschraubplatte vorgesehene Öffnung wird erreicht, dass sich die Kupplungsstange beim Einfahren des Kupplungskopfes aus seiner Normalstellung in Richtung des ersten Wagenkastens rückwärts in einen außerhalb der Kupplungsebene liegenden Raum bewegen kann, um somit aus dem Kraftfluss genommen zu werden.

Andererseits wäre es selbstverständlich auch denkbar, dass die Kupplungsstange selber teleskopartig aufgebaut ist, wobei die einzelnen Überlastsicherungsglieder im Normalbetrieb diese teleskopartig aufgebaute Kupplungsstange in ihrem ausgefahrenen Zustand halten. In diesem Fall bewirkt ein Ansprechen der Überlastsicherung, dass die teleskopartige Kupplungsstange durch die einwirkenden Stoßkräfte zusammengefahren wird, infolgedessen sich der Kupplungskopf und der erste Wagenkasten relativ aufeinander zu bewegen und der Kupplungskopf aus seiner Normalstellung in Richtung des ersten Wagenkastens eingefahren werden kann.

Bei einer bevorzugten Weiterentwicklung der zuletzt genannten Ausführungsform, bei welcher die Kupplungsstange nach dem Ansprechen des zumindest einen Überlastsicherungsgliedes zumindest teilweise aus dem zwischen den benachbarten Wagenkästen übertragenen Kraftfluss genommen wird, ist vorgesehen, dass die Kupplungsvorrichtung ferner zumindest ein Energieverzehrelement bzw. wagenkastenseitig angeordnetes Energieaufnahmeelement aufweist, über welches nach Ansprechen des zumindest einen Überlastsicherungsgliedes zumindest teilweise der zwischen den benachbarten Wagenkästen übertragene Kraftfluss geleitet wird. Bei dieser Lösung kommt das zumindest eine Energieverzehrelement, welches vorzugsweise in Gestalt eines wagenkastenseitig angeordneten Seitenpufferelements ausgebildet ist, nach Ansprechen der Überlastsicherung zum Einsatz, so dass die übertragene Stoßenergie zuverlässig abgebaut werden kann, wobei gleichzeitig durch das initiierte Einfahren des Kupplungskopfes in Richtung des ersten Wagenkastens der durch das zumindest eine Energieverzehrelement bewirkte Energieverzehr in einem vorhersehbaren Ereignisablauf stattfindet, da vorzugsweise die gesamte Energie über das zumindest eine Energieverzehrelement übertragen wird.

Bei einer anderen bevorzugten Weiterentwicklung der erfindungsgemäßen Kupplungsvorrichtung weist diese zumindest ein vorzugsweise in der Kupplungsvorrichtung integriertes Energieverzehrelement auf, welches derart ausgelegt ist, bei Überschreiten eines mit dem durch das Energieverzehrelement fließenden Kraftfluss übertragenen zweiten Energiebetrages anzusprechen und dabei zumindest einen Teil des durch das Energieverzehrelement übertragenen Energiebetrages zu absorbieren und somit abzubauen, wobei das zumindest eine Überlastsicherungsglied der Kupplungsvorrichtung dahingehend ausgelegt ist, bei Überschreiten des mit dem durch das Überlastsicherungsglied fließenden Kraftfluss übertragenen ersten Energiebetrages anzusprechen und dadurch den durch das zumindest eine Energieverzehrelement fließenden Kraftfluss zu erhöhen. Bei dieser bevorzugten Weiterentwicklung ist somit vorgesehen, dass nach Ansprechen der Überlastsicherung eine Kraftflussumleitung auf das zumindest eine Energieverzehrelement erfolgt.

In vorteilhafter Weise ist das zumindest eine Energieverzehrelement dahingehend ausgelegt, dass der für das Ansprechen des Energieverzehrelements charakteristische zweite Energiebetrag niedriger als der für das Ansprechen der Überlastsicherung charakteristische erste Energiebetrag ist. Bei der durch das Ansprechen der Überlastsicherung initiierten Kraftflussumleitung auf das Energieverzehrelement erfüllt das Energieverzehrelement aufgrund seiner hinsichtlich der charakteristischen Ansprechkraft geeigneten Auslegung unmittelbar die Energieverzehrfunktion, so dass die anfallende Energie unmittelbar mit bzw. direkt nach dem Ansprechen der Überlastsicherung durch das zumindest eine Energieverzehrelement zumindest teilweise verzehrt bzw. absorbiert wird.

In einer bevorzugten Realisierung der zuletzt genannten Ausführungsform ist vorgesehen, dass das zumindest eine Energieverzehrelement derart in der Kupplungsvorrichtung angeordnet ist, dass vor dem Ansprechen des zumindest einen Überlastsicherungsgliedes im wesentlichen kein Kraftfluss über das Energieverzehrelement fließt. Dies kann beispielsweise durch einen kraftfreien Einbau und / oder einen Einbau mit einem gewissen Spiel des zumindest einen Energieverzehrelements in der Kupplungsvorrichtung erfolgen. Nach dem Ansprechen der Überlastsicherung wird - wie vorstehend erläutert - die Kraftflussumleitung über das zumindest eine Energieverzehrelement initiiert, so dass dann der durch das zumindest eine Energieverzehrelement fließende Kraftfluss überhaupt erst ermöglicht wird.

Hierbei sei angemerkt, dass unter dem hierin verwendeten Begriff "Erhöhung des durch das Energieverzehrelement fließenden Kraftfluss" grundsätzlich jedwede Zunahme eines durch das Element fließenden Kraftflusses zu verstehen ist. Insbesondere soll hierunter auch der Fall verstanden werden, wenn vor dem Ansprechen der Überlastsicherung überhaupt kein Kraftfluss über das Energieverzehrelement übertragen wird.

In einer besonders bevorzugten Realisierung des zumindest einen Überlastsicherungsgliedes ist vorgesehen, dass dieses einen zylindrischen Körper aufweist, der derart in der Kupplungsvorrichtung angeordnet ist, dass der durch das zumindest eine Überlastsicherungsglied fließende Kraftfluss im wesentlichen in Längsrichtung des zylindrischen Körpers verläuft, wobei der erste für das Ansprechen des Überlastsicherungsgliedes charakteristische Energiebetrag nunmehr durch eine geeignete Wahl der Geometriekennwerte des zylindrischen Körpers festlegbar ist.

Denkbar hierbei wäre beispielsweise, dass der zylindrische Körper ein stabförmiger Körper ist, wobei die Wirkungslinie des durch das Überlastsicherungsglied fließenden Kraftflusses im wesentlichen in der Stabachse des stabförmigen Körpers liegt. Als stabförmigen Körper kommt hierbei jedweder zylindrischer Körper in Frage, wobei insbesondere der für das Ansprechen des Überlastsicherungsgliedes charakteristische erste Energiebetrag durch eine geeignete Wahl der Querschnittsform und/oder der Länge des Körpers festlegbar ist. Da das Trägheitsmoment und das Widerstandsmoment des stabförmigen Körpers insbesondere von der Querschnittsform des Körpers abhängig ist, kann durch eine geeignete Wahl dieser der erste Energiebetrag vorab genau festgelegt werden.

Selbstverständlich ist auch denkbar, dass das Überlastsicherungsglied mehrere Einzelkörper aufweist, über die bzw. durch die im normalen Fahrbetrieb der Kraftfluss fließt.

Bei einer Ausführungsform, bei welcher ein stabförmiger Körper im wesentlichen das Überlastsicherungsglied begründet, definiert insbesondere die so genannte Knicklast des Körpers den ersten für das Ansprechen des Überlastsicherungsgliedes charakteristischen Energiebetrag. Im einzelnen wäre es hierbei denkbar, dass bei Überschreiten des (ersten) charakteristischen Energiebetrages der zumindest eine stabförmige Körper des Überlastsicherungsgliedes durch einen Knickvorgang seine Funktion als Kraftübertragungsglied verliert und beispielsweise ein Ansprechen eines in der Kupplungsvorrichtung vorgesehenen Energieverzehrelements und/oder ein Einfahren des Kupplungskopfes aus seiner Normalstellung in Richtung des der Kupplungsvorrichtung zugeordneten Wagenkastens gestattet. Das Einfahren des Kupplungskopfes erfolgt dabei vorzugsweise gemäß eines vorab festlegbaren Ereignisablaufes.

Unter einem Knickvorgang wird allgemein hierin der Verlust der Stabilität von geraden bzw. leicht gekrümmten Stäben unter der Wirkung von Druckkräften verstanden, deren Wirkungslinie in der Stabachse liegt. Der Verlust der Stabilität äußert sich in einer mit der Belastung rasch wachsenden Formänderung des Stabes ab einer bestimmten Belastung, der so genannte Knicklast (d.h. ab einer durch Zug oder Stoßkräften anfallenden, über den stabförmigen Körper übertragenen, charakteristischen (ersten) Energie), wobei infolgedessen ein seitliches Ausweichen der Stabachse (Biegeknicken), ein Verdrehen des Stabquerschnittes (Drillknicken) oder ein seitliches Ausweichen der Stabachse und ein Verdrehen des Stabquerschnittes (Biegedrillknicken) auftritt.

Zwar ist die Knicklast in gewisser Weise auch von der Materialeigenschaft des eingesetzten stabförmigen Körpers abhängig, allerdings ist der Einfluss von (beispielsweise temperaturbedingten) Schwankungen der Materialeigenschaft des Stabes im Hinblick auf die Knicklast vernachlässigbar. Insbesondere aber ist die Knicklast von den Geometriewerten des stabförmigen Körpers abhängig, wie etwa der Länge des Stabes. Des weiteren spielen im Hinblick auf die Knicklast die Art der Beanspruchung, d.h. der Verlauf der Normalkräfte und/oder der Biegemomente über die Stablänge, und die Einspannung bzw. Auflagerung oder Stützung des stabförmigen Körpers eine wesentliche Rolle.

Demnach kann durch eine geeignete Wahl der Länge des stabförmigen Körpers und durch eine geeignete Wahl der Positionierung der Stabachse des stabförmigen Körpers im Hinblick auf den durch das Überlastsicherungsglied fließenden Kraftfluss das Ansprechen des Überlastsicherungsgliedes vorab genau festgelegt werden. Die Einspannung bzw. Auflagerung des stabförmigen Körpers bestimmt dabei die Art und Weise, wie beim Überschreiten des ersten Energiebetrages der stabförmige Körper anspricht, d.h. ob ein Biegeknicken, ein Drillknicken oder ein Biegedrillknicken auftritt.

Denkbar hierbei wäre es, den stabförmigen Körper in den von der Kupplungsstange übertragenen Kraftfluss derart anzuordnen, dass der gesamte über die Kupplungsstange übertragene Kraftfluss vollständig im wesentlichen in Längsrichtung des stabförmigen Körpers durch diesen hindurch läuft, wobei der stabförmige Körper an beiden Seiten fest eingespannt oder an zumindest einer Seite gelenkig befestigt ist.

Bei einer alternativen Realisierung des Überlastsicherungsgliedes kann ferner vorgesehen sein, dass dieses als zylindrischen Körper einen insbesondere hohlzylindrischen und vorzugsweise rohrförmigen Körper (Beulkörper) aufweist, wobei die Wirkungslinie des durch das Überlastsicherungsglied fließenden Kraftflusses in der Mantelfläche des hohlförmigen Körpers liegt. Der für das Ansprechen des Überlastsicherungsgliedes charakteristische erste Energiebetrag kann bei dieser Ausführungsform durch eine geeignete Wahl der charakteristischen Beullast des hohlzylindrischen Körpers festgelegt werden. Die Beullast, d.h. die Last, bei der das Beulen des hohlzylindrischen Körpers beginnt, dient hierbei als Maß des für das Ansprechen des Überlastgliedes charakteristischen ersten Energiebetrags.

Unter dem Begriff "Beulen" ist hierin das Ausweichen von Querschnitten des hohlzylindrischen Körpers aus ihrer vorgegebenen Ebene verstanden, wenn in der Querschnittsebene mindestens in einer Richtung eine charakteristische Druckspannung angelegt wird.

Bei den zuvor genannten möglichen Realisierungen des Überlastsicherungsgliedes in Gestalt eines stabförmigen Körpers oder in Gestalt eines rohrförmigen Körpers kann grundsätzlich der für das Ansprechen des Überlastsicherungsgliedes charakteristische erste Energiebetrag durch eine geeignete Wahl der Geometriekennwerte des Überlastsicherungsgliedes vorab genau festgelegt werden, wobei der erste Energiebetrag insbesondere nicht mehr von Materialkennwertschwankungen des für das Überlastsicherungsglied eingesetzten Materials abhängt.

Wie dargelegt, kann durch eine geeignete Wahl des Überlastsicherungsgliedes der Stabilitätsverlust des Überlastsicherungsgliedes bei dem charakteristischen ersten Energiebetrag insbesondere durch eine geeignete Wahl der Geometrie des Überlastsicherungsgliedes und durch eine geeignete Anordnung des Überlastsicherungsgliedes in dem von der Kupplungsstange übertragenen Kraftfluss eingestellt werden. Andererseits ist es selbstverständlich auch denkbar, dass alternativ oder zusätzlich hierzu der erste Energiebetrag, bei welchem das Überlastsicherungsglied anspricht und seine Funktion als Kraftübertragungsglied verliert, vorab durch gezieltes Einbringen von Imperfektionen, insbesondere durch Einbringen von Vorverformungen der Stabachse des Überlastsicherungsgliedes und/oder durch Einbringen von Ungleichmäßigkeiten in dem Material des Überlastsicherungsgliedes eingestellt wird.

Unter dem Begriff "Imperfektion" ist hierin eine gezielt eingebrachte Abweichung in das als Überlastsicherungsglied verwendeten Bauteils von seiner idealen Form zu verstehen. In einem Fall, wenn als Überlastsicherungsglied ein stabförmiger Körper verwendet wird, wäre es beispielsweise denkbar in dem Material des stabförmigen Körpers vorab Vorverformungen einzubringen, welche die Art der Beanspruchung, und insbesondere das Ansprechen des Überlastsicherungsgliedes je nach Ausführung wesentlich beeinflussen können. Bei dem stabförmigen Körper treten infolge von Imperfektionen zusätzlich zu den Druckkräften Biegemomente auf, die den Widerstand des stabförmigen Körpers gegen Knicken entscheidend beeinflussen können. Durch das gezielte Einbringen von Imperfektionen ist es somit möglich, vorab genau festzulegen, bei welchem Energiebetrag der als Überlastsicherungsglied verwendete stabförmige Körper seine Funktion als Kraftübertragungselement durch Abknicken verliert und somit beispielsweise den durch das Energieverzehrelement fließenden Kraftfluss erhöht.

Denkbar allerdings wäre es auch, dass im Falle eines stabförmigen Körpers, der als Überlastsicherungsglied verwendet wird, dieser absichtlich hinsichtlich der Richtung des durch das Überlastsicherungsglied fließenden Kraftflusses schräg angeordnet ist. Eine derartige Schiefstellung des stabförmigen Körpers beeinflusst ebenfalls die Art der Beanspruchung des Überlastsicherungsgliedes.

Wenn hingegen als Überlastsicherungsglied ein hohlzylindrischer, vorzugsweise rohrförmiger Körper (welches hierin auch als "Beulrohr" bezeichnet wird) verwendet wird, können ähnlich Effekte erzielt werden, wenn gezielt die hohlzylindrische Form des Körpers von der Idealform abweicht. Andererseits ist es selbstverständlich denkbar, Material-Inhomogenitäten in dem für das Überlastsicherungsglied verwendeten Werkstoff einzubringen.

Gemäß einer bevorzugten Ausführungsform der Erfindung, bei welcher die Kupplungsvorrichtung zusätzlich zu dem zumindest einen Überlastsicherungsglied auch noch zumindest ein Energieverzehrelement aufweist, ist vorgesehen, dass in der Kupplungsvorrichtung das zumindest eine Energieverzehrelement und das zumindest eine Überlastsicherungsglied dergestalt miteinander wechselwirken, dass bei Überschreiten des für das Ansprechen des zumindest einen Überlastsicherungsgliedes charakteristischen (ersten) Energiebetrages der durch das Energieverzehrelement fließende Kraftfluss erhöht wird. Wie vorstehend erläutert, kann dies beispielsweise dadurch geschehen, dass bei Überschreiten des charakteristischen ersten Energiebetrages das Überlastsicherungsglied wegknickt (im Falle eines stabförmigen Körpers) oder gestaucht wird (im Falle eines rohrförmigen Körpers bzw. Beulrohres), so dass das Überlastsicherungsglied in diesem Fall aus dem über die Kupplungsstange übertragenen Krafftfluss genommen wird und somit seine Funktion als Kraftübertragungsglied verliert. Vorzugsweise ist in diesem Fall das zumindest eine Energieverzehrelement im Hinblick auf den über die Kupplungsstange übertragenen Krafftfluss und im Hinblick auf das zumindest eine Überlastsicherungsglied derart angeordnet, dass vor dem Ansprechen des zumindest einen Überlastsicherungsgliedes dieses, wenn überhaupt, nur einen geringen Beitrag zur Kraftübertragung liefert.

Andererseits sollte in einem Fall, wenn in der erfindungsgemäßen Kupplungsanordnung zumindest ein Energieverzehrelement vorgesehen ist, das zumindest eine Energieverzehrelement derart angeordnet und ausgelegt sein, dass nach Ansprechen der Überlastsicherung dieses in den von der Kupplungsstange übertragenen Krafftfluss eingebunden wird, und die Funktion als Kraftübertragungselement übernimmt.

In vorteilhafter Weise ist der für das Ansprechen des Energieverzehrelements charakteristische zweite Energiebetrag kleiner als der für das Ansprechen der Überlastsicherung charakteristische erste Energiebetrag. In solch einem Fall nämlich kommt dem Energieverzehrelement bei Ansprechen der Überlastsicherung unmittelbar die Energieverzehrfunktion zu, wenn durch das Ansprechen der Überlastsicherung der durch das Energieverzehrelement fließende Kraftfluss entsprechend erhöht wird. Vorzugsweise sollte das Energieverzehrelement derart in der Kupplungsvorrichtung angeordnet sein, dass nach Ansprechen der Überlastsicherung der ursprünglich durch das Überlastsicherungsglied fließende Krafftfluss derart umgeleitet wird, dass dieser nach Ansprechen der Überlastsicherung im wesentlichen vollständig durch das Energieverzehrelement fließt. Grundsätzlich allerdings sollte der Energiebetrag, den das zumindest eine Energieverzehrelement insgesamt abbauen kann, hinreichend für die jeweilige Anwendung sein.

Bei der vorstehend genannten bevorzugten Auslegung und Anordnung des Energieverzehrelements in der Kupplungsvorrichtung kann in vorteilhafter Weise die Funktionsteilung des Energieverzehrelements verwirklicht werden. In diesem Fall nämlich dient das zumindest eine Energieverzehrelement in der Kupplungsvorrichtung nicht oder nur zu einem geringen Ausmaß dazu, die im normalen Fahrbetrieb auftretende Zug- und Stoßkräfte zu übertragen, so dass das Energieverzehrelement im Normalbetrieb nahezu keine Funktion als Kraftübertragungsglied aufweist. Vielmehr übernimmt im normalen Fahrbetrieb das zumindest eine Überlastsicherungsglied die Funktion der Kraftübertragung.

Es sei an dieser Stelle darauf hingewiesen, dass selbstverständlich der im normalen Fahrbetrieb zu übertragene Krafftfluss nicht einzig und allein durch das zumindest eine Überlastsicherungsglied übertragen werden muss; selbstverständlich wäre es auch denkbar, dass ein Teil des Kraftflusses über andere Komponenten übertragen wird.

Die Überlastsicherung in der erfindungsgemäßen Kupplungsvorrichtung ist dabei vorzugsweise so ausgelegt, dass bei Überschreiten der Betriebslast der Kupplungsvorrichtung, wie etwa beim Aufprall des Fahrzeuges auf ein Hindernis, der durch die Überlastsicherung fließende Krafftfluss zunimmt und den für das Ansprechen der Überlastsicherung charakteristischen ersten Energiebetrag überschreitet. In diesem Fall verliert das in der Überlastsicherung vorgesehene zumindest eine Überlastsicherungsglied (wegen seines vorzugsweise spielfreien Einbaus) unmittelbar seine Funktion als Kraftübertragungsglied, infolgedessen der durch das Überlastsicherungsglied bisher fließende Kraftfluss beispielsweise durch das Energieverzehrelement umgeleitet wird. Dieses Energieverzehrelement hingegen erfüllt dann die Energieverzehrfunktion, da der für das Ansprechen des Energieverzehrelement charakteristische zweite Energiebetrag in bevorzugter Weise niedriger als der für das Ansprechen der Überlastsicherung charakteristische erste Energiebetrag ist, so dass die anfallende Energie zumindest teilweise verzehrt bzw. absorbiert wird.

Durch die vorstehend beschriebene Funktionsteilung zwischen Energieverzehrelement und Überlastsicherung ist es somit möglich, einerseits durch das definierte Ansprechen der Überlastsicherung auch das Ansprechen des Energieverzehrelements bei einem vorab genau festlegbaren, über die Kupplungsstange übertragenen Krafftfluss zu initiieren, und andererseits durch eine entsprechende Auslegung des Energieverzehrelements ferner eine maximale Energieaufnahme bei Überschreiten der Betriebslast sicherzustellen.

Wie bereits angedeutet, ist es bevorzugt, dass das gegebenenfalls vorhandene zumindest eine Energieverzehrelement und das zumindest eine Überlastsicherungsglied jeweils derart ausgelegt bzw. in der Kupplungsvorrichtung angeordnet sind, dass das zumindest ein Energieverzehrelement erst bei Ansprechen des zumindest einen Überlastsicherungsgliedes in den über die Kupplungsstange übertragenen Kraftfluss gesetzt wird. Andererseits wäre es selbstverständlich auch denkbar, dass auch im normalen Fahrbetrieb bereits ein Teil der übertragenen Zug- und Stoßkräfte durch das Energieverzehrelement geleitet werden kann. Allerdings sollte dieser Anteil der mit dem Energieverzehrelement im normalen Fahrbetrieb bewirkten Kraftübertragung im Vergleich zu dem Anteil der von der Überlastsicherung bewirkten Kraftübertragung vorzugsweise geringer sein, um die zuvor beschriebene Funktionsaufteilung in der Praxis zu ermöglichen bzw. zu erleichtern.

Andererseits ist es besonders bevorzugt, dass das gegebenenfalls vorhandene zumindest eine Energieverzehrelement bei Überschreiten der Betriebslast möglichst unmittelbar anspricht und einen Energieverzehr ermöglicht. Aus diesem Grund ist eine nahezu spielfreie Anordnung des zumindest einen Energieverzehrelements in der Kupplungsvorrichtung erstrebenswert.

Die erfindungsgemäße Lösung ist nicht auf bestimmte Anordnungen des zumindest einen Überlastsicherungsgliedes und des gegebenenfalls vorhandenen Energieverzehrelements zueinander und im Hinblick auf die Richtung des über die Kupplungsstangen übertragenen Krafftflusses beschränkt. So wäre es beispielsweise denkbar, dass das zumindest ein Überlastsicherungsglied hinsichtlich des über die Kupplungsstange übertragenen Kraftflusses parallel zu der Kupplungsstange (bzw. des Kupplungsstangenstempels) angeordnet ist. Alternativ hierzu kommt auch eine Lösung in Frage, bei welcher das zumindest eine Überlastsicherungsglied hinsichtlich des über die Kupplungsstange übertragenen Kraftflusses in Reihe mit der Kupplungsstange (bzw. mit dem Kupplungsstangenstempel) angeordnet ist.

Im Hinblick auf die Anordnung des gegebenenfalls vorhandenen Energieverzehrelementes ist in einer besonders bevorzugten Realisierung vorgesehen, dass dieses hinsichtlich des über die Kupplungsstange übertragenen Kraftflusses zumindest nach Ansprechen des zumindest einen Überlastsicherungsgliedes parallel zu der Kupplungsstange (bzw. zu dem Kupplungsstangenstempel) angeordnet ist. Alternativ hierzu kommt auch eine Lösung in Frage, bei welcher das zumindest eine Überlastsicherungsglied hinsichtlich des über die Kupplungsstange übertragenen Krafftflusses in Reihe mit der Kupplungsstange (bzw. mit dem Kupplungsstangenstempel) angeordnet ist.

Im Hinblick auf die Anordnung des gegebenenfalls vorhandenen Energieverzehrelementes ist in einer besonders bevorzugten Realisierung vorgesehen, dass dieses hinsichtlich des über die Kupplungsstange übertragenen Kraftflusses zumindest nach Ansprechen des zumindest einen Überlastsicherungsgliedes parallel zu der Kupplungsstange angeordnet ist. Alternativ hierzu wäre es selbstverständlich auch denkbar, dass das zumindest eine Energieverzehrelement hinsichtlich des über die Kupplungsstange übertragenen Kraftflusses zumindest nach Ansprechen des zumindest einen Überlastsicherungsgliedes in Reihe mit der Kupplungsstange angeordnet ist.

Obwohl vorstehend beschrieben wurde, dass der zweite, für das Ansprechen des zumindest einen Energieverzehrelements charakteristische Energiebetrag in vorteilhafter Weise kleiner als der für das Ansprechen der Überlastsicherung charakteristisch erste Energiebetrag sein sollte, ist die Erfindung nicht auf diese bevorzugte Auslegung der jeweiligen Energiebeträge zueinander festgelegt. Selbstverständlich wäre es auch denkbar, dass der erste Energiebetrag und der zweite Energiebetrag im Wesentlichen gleich sind. Andererseits könnte selbstverständlich auch der zweite Energiebetrag größer als der erste Energiebetrag sein; dies ist insbesondere in einem Fall von Vorteil, wenn der Kraftfluss, welcher durch das gegebenenfalls vorhandene Energieverzehrelement fließt, beispielsweise nach Ansprechen der Überlastsicherung derart erhöht wird, dass die mit diesem erhöhten Kraftfluss übertragene Energie den für das Ansprechen des zumindest einen Energieverzehrelements charakteristischen (zweiten) Energiebetrag überschreitet.

Im Folgenden werden bevorzugte Ausführungsformen der erfindungsgemäßen Lösung, bei welcher die Kupplungsvorrichtung zusätzlich zu dem zumindest einen Überlastsicherungsglied auch noch Energieverzehrelemente aufweist, anhand der Zeichnungen näher erläutert.

Es zeigen:

Fig. 1    eine erste bevorzugte Ausführungsform der erfindungsgemäßen Kupplungsvorrichtung im normalen Fahrbetrieb;

Fig. 2    die Kupplungsvorrichtung gemäß Fig. 1 nach Überschreiten der Betriebslast der Kupplungsvorrichtung;

Fig. 3    eine zweite bevorzugte Ausführungsform der erfindungsgemäßen Kupplungsvorrichtung im normalen Fahrbetrieb;

Fig. 4    die Kupplungsvorrichtung gemäß Fig. 3 nach Überschreiten der Betriebslast der Kupplungsvorrichtung;

Fig. 5    eine dritte bevorzugte Ausführungsform der erfindungsgemäßen Kupplungsvorrichtung im normalen Fahrbetrieb; und

Fig. 6    die Kupplungsvorrichtung gemäß Fig. 5 nach Überschreiten der Betriebslast der Kupplungsvorrichtung.

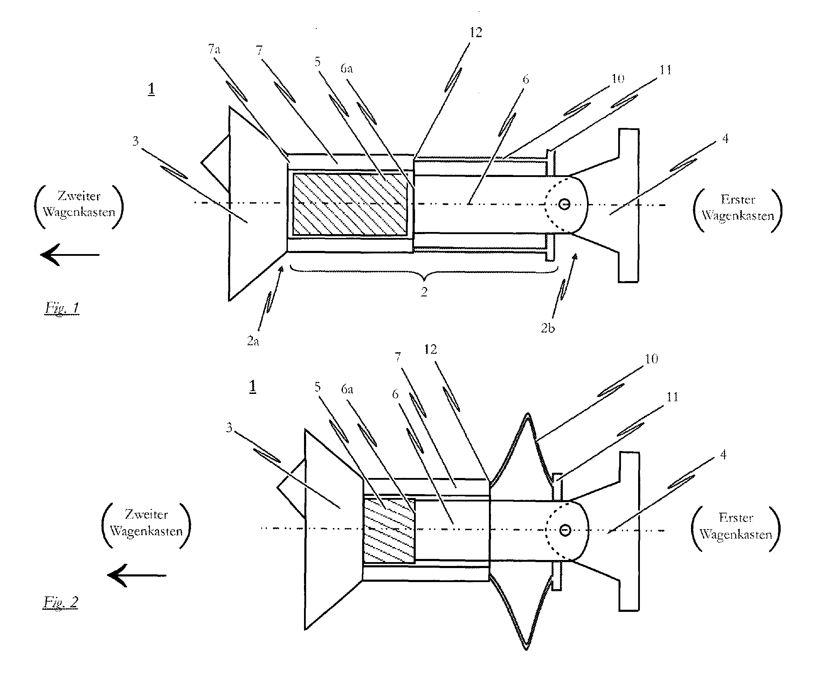

In Fig. 1 ist eine erste bevorzugte Ausrichtungsform der erfindungsgemäßen Kupplungsvorrichtung 1 in ihrem normalen Betriebszustand gezeigt; Fig. 2 zeig die Kupplungsvorrichtung 1 gemäß der ersten bevorzugten Ausführungsform nach Überschreiten der Betriebslast und nach Ansprechen sowohl der Überlastsicherung 10 als auch des Energieverzehrelements 5.

Die erfindungsgemäße Kupplungsvorrichtung 1 dient zum Übertragen von Zug- und Stoßkräften zwischen zwei (nicht explizit dargestellten) benachbarten Wagenkästen eines mehrgliedrigen Fahrzeugs, insbesondere eines Schienenfahrzeug. Im einzelnen weist die Kupplungsvorrichtung 1 eine Kupplungsstange 2 auf, welche an ihrem ersten Endabschnitt 2a einen Kupplungskopf 3 aufweist, und welche an ihrem zweiten Endabschnitt 2b über einen Lagerbock 4 mit dem ersten (nicht explizit dargestellten) Wagenkasten vorzugsweise gelenkig verbunden ist, um somit eine Kraftübertragung zu gewährleisten. Dabei ist vorgesehen, dass bei einer Übertragung von Zug- und Stoßkräften der Kraftfluss vom ersten Wagenkasten zu dem benachbarten zweiten Wagenkasten durch die Kupplungstage 2 zumindest teilweise hindurchläuft.

Wie in Fig. 1 dargestellt, weist die Kupplungsstange 2 einen Kupplungsstangenstempel 6 und ein Kupplungsstangengehäuse 7 auf. In dem Kupplungsstangengehäuse 7 ist ein vorzugsweise destruktiv ausgebildetes Energieverzehrelement 5 angeordnet. Als Energieverzehrelement 5 kommt beispielsweise ein Verformungsrohr oder ein anderer Körper in Frage, der ausgelegt ist, durch plastische Verformung die bei einem Stoß übertragene Energie zu absorbieren. Selbstverständlich kommen hier auch regenerativ ausgebildete Energieverzehrelemente in Frage.

Der Kupplungsstangenstempel 6 liegt im normalen Fahrbetrieb (Fig. 1) mit seiner energieverzehrelementseitigen Stempelfläche 6a an dem im Kupplungsstangengehäuse 7 angeordneten Energieverzehrelement 5 an. Zwischen dem Kupplungsstangenstempel 6 und dem Kupplungsstangengehäuse 7 kann, muss aber nicht, eine kraftschlüssige Verbindung vorliegen, so dass ein Teil des Kraftflusses im normalen Fahrbetrieb auch über den Kupplungsstangenstempel 6 und das im Kupplungsstangengehäuse 7 angeordnete Energieverzehrelement 5 läuft. Andererseits kann, muss aber nicht, zwischen der energieverzehrelementseitigen Stempelfläche 6a des Kupplungsstangenstempels 6 und dem in dem Kupplungsstangengehäuse 7 vorgesehenen Energieverzehrelement 5 ein Abstand vorliegen, so dass das Energieverzehrelement 5 mit einem gewissen Spiel zwischen der energieverzehrelementseitigen Stirnfläche 6a des Kupplungsstangenstempels 6 und der kupplungskopfseitigen Innenwand 7a des Kupplungsstangengehäuses 7 angeordnet bzw. eingespannt ist. In Fig. 1 ist eine derartiges Spiel zwischen der Stirnfläche 6a des Kupplungsstangenstempels 6 und dem Energieverzehrelement 5 vorgesehen.

Die Kupplungsvorrichtung 1 gemäß der ersten bevorzugten Ausführungsform weist des weiteren eine Überlastsicherung in Gestalt von zwei Überlastsicherungsgliedern 10 auf, welche jeweils durch einen stabförmigen Körper gebildet sind. Beide Überlastsicherungsglieder 10 sind zwischen einem wagenkastenseitigen ersten Spannelement 11 bzw. einer wagenkastenseitigen ersten Spannfläche 11 und einem kupplungskopfseitigen zweiten Spannelement bzw. Spannfläche 12 spielfrei eingespannt.

Insgesamt ist die Kupplungsvorrichtung 1 gemäß der ersten bevorzugten Ausführungsform derart ausgelegt, dass bei der Übertragung von Zug- und Stoßkräften zwischen den benachbarten Wagenkästen der Kraftfluss beim Lagerbock 4 aufgeteilt wird, wobei ein erster (kleinerer) Teil des Kraftflusses über den Kupplungsstangenstempel 6 geleitet wird, und wobei ein zweiter (größerer) Teil des Kraftflusses über das wagenkastenseitige Spannelement 11 und die jeweiligen Überlastsicherungsglieder 10 geleitet wird. Diese beiden Anteile des Kraftflusses werden anschließend beim kupplungskopfseitigen Spannelement 12 wiedervereinigt und laufen dann im Wesentlichen vollständig über das Kupplungsstangengehäuse 7 zum Kupplungskopf 3. Insbesondere dient das Energieverzehrelement 5 bei dieser Anordnung nicht als Kraftübertragungsglied.

Des Weiteren ist im Hinblick auf die Kraftübertragung im normalen Betrieb der Einfluss des Kupplungsstangenstempels 6 im Vergleich zu dem Einfluss der jeweiligen Überlastsicherungsglieder 10 relativ gering. Anders ausgedrückt bedeutete dies, dass im normalen Fahrbetrieb im Wesentlichen die Überlastsicherungsglieder 10 im Zusammenwirken mit dem Kupplungsstangengehäuse 7 die Übertragung der Zug- und Stoßkräfte zwischen den benachbarten Wagenkästen gestatten.

Wenn nun der beim Übertragen des durch die Überlastsicherung 10 fließenden Anteils des durch den Kraftfluss anfallenden Energiebetrages einen für das Ansprechen der Überlastsicherung 10 charakteristischen ersten Energiebetrag überschreitet, was bei Überschreiten der Betriebslast der Kupplungsvorrichtung 1 auftritt, sprechen die Überlastsicherungsglieder 10 der Überlastsicherung an und verlieren somit ihr Funktion als Kraftübertragungsglied. In Fig. 2 ist ein derartiger Zustand gezeigt.

Wie in Fig. 2 dargestellt, hat das Überschreiten des mit dem durch die Überlastsicherung 10 fließenden Kraftfluss übertragenen ersten Energiebetrages zu einem gezielten Abknicken der einzelnen Überlastsicherungsglieder 10 geführt. Durch das Ansprechen der Überlastsicherung 10 sind die Überlastsicherungsglieder aus dem Kraftübertragungskonzept der Kupplungsvorrichtung 1 genommen, infolgedessen der über den Kupplungsstangenstempel 6 und das Energieverzehrelement 5 fließende Kraftfluss um den Betrag erhöht wird, der im normalen Fahrbetrieb von der Überlastsicherung 10 übertragen wird. Die bei der Übertragung des durch den Kupplungsstangenstempel 6 und das Energieverzehrelement 5 fließenden, erhöhten Kraftflusses anfallende Energie entspricht in vorteilhafter Weise zumindest einem für das Ansprechen des Energieverzehrelements 5 charakteristischen zweiten Energiebetrag, so dass unmittelbar nach dem Ansprechen der Überlastsicherung 10 auch das Energieverzehrelement 5 anspricht und die anfallende Energie zumindest teilweise durch plastische Verformung absorbiert bzw. in Verformungsenergie umwandelt.

Ebenfalls ist den Figuren 1 und 2 zu entnehmen, dass erst durch das Ansprechen der Überlastsicherung 10 das Einfahren des Kupplungskopfes 3 aus seiner in Figur 1 gezeigten Normalstellung in Richtung des ersten Wagenkastens initiiert wird. Im Einzelnen findet zeitgleich mit dem Ansprechen der Überlastsicherung 10 eine Bewegung des Kupplungskopfes 3 relativ auf den ersten Wagenkasten zu statt. Bei der dargestellten Ausführungsform ist dazu die Kupplungsstange 2 teleskopartig aufgebaut, wobei in dem in Figur 1 gezeigten Zustand die teleskopartige Kupplungsstange 2 in ihrer ausgefahrenen Position mit Hilfe der einzelnen Überlastsicherungsglieder 10 gehalten wird. Hingegen ist in Figur 2 ein Fall gezeigt, in welchem die teleskopartige Anordnung der Kupplungsstange 2 zumindest teilweise eingefahren ist, was das Einfahren des Kupplungskopfes 3 in Richtung des ersten Wagenkastens bewirkt.

Bei der ersten bevorzugten Ausführungsform der erfindungsgemäßen Kupplungsvorrichtung 1 wird die Überlastsicherung durch zwei stabförmige Überlastsicherungsglieder 10 gebildet. Selbstverständlich ist auch denkbar eine andere Anzahl von Überlastsicherungsgliedern 10 einzusetzen. Alternativ hierzu kann auch anstelle der stabförmigen Überlastsicherungsglieder 10 ein so genanntes Beulelement eingesetzt werden, welches beispielsweise einen hohlzylindrischer Beulkörper aufweist, wobei der Kupplungsstangenstempel 6 von der Mantelfläche dieses Beulkörpers umgeben wird. Bei dieser Abwandlung wird dann das vordere und hintere Ende des Beulkörpers zwischen dem ersten bzw. dem zweiten Spannelement 11, 12 eingespannt. Beim Überschreiten des für das Ansprechen des Beulelements charakteristischen ersten Energiebetrags, der bei dem durch das Beulelement fließenden Kraftfluss anfällt, würde dann das Beulelement gestaucht bzw. verbeult werden, so dass es seine Funktion als Kraftübertragungsglied verlieren. Das anschließende Ansprechen des Energieverzehrelements 5 erfolgt analog zu dem zuvor Gesagten.

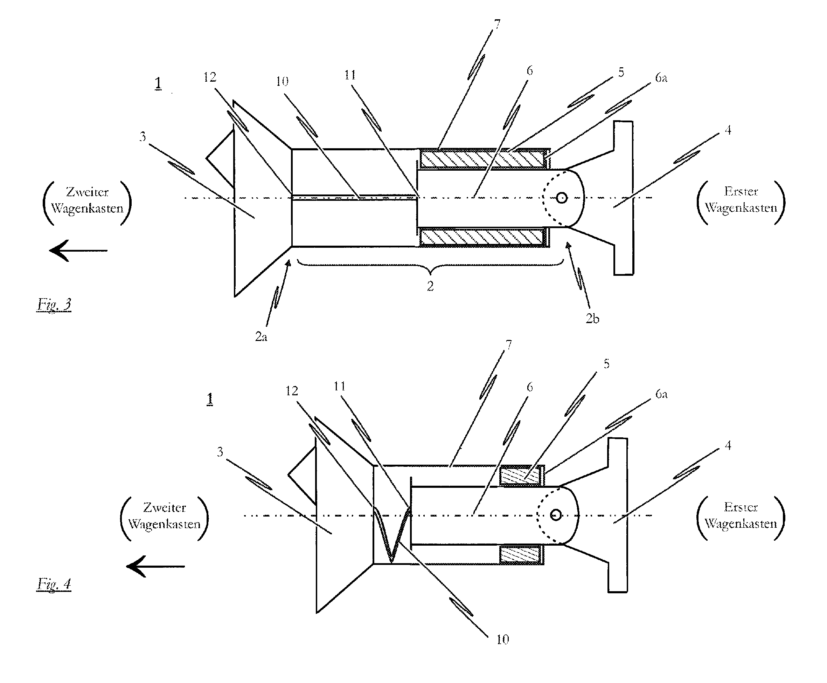

In Fig. 3 ist eine schematische Darstellung einer zweiten bevorzugten Ausführungsform der erfindungsgemäßen Kupplungsvorrichtung 1 gezeigt. Im Unterschied zu der ersten in Fig. 1 gezeigten Ausführungsform ist hier das Überlastsicherungsglied 10 nicht parallel zum Kupplungsstangenstempel 6 sondern in Reihe hierzu angeordnet. Als Überlastsicherungsglied 10 kommt wieder ein stabförmiger Körper, der beim Überschreiten einer charakteristischen Last wegknickt, oder aber auch ein hohlzylindrischer Körper in Frage, der beim Ansprechen entsprechend gestaucht wird.

In der bevorzugten zweiten Ausführungsform ist diese Verwendung eines stabförmigen Überlastsicherungsgliedes 10 als Überlastsicherung gezeigt. Ebenfalls ist zu erkennen, dass bei dieser Ausführungsform mehrere (hier 2) Energieverzehrelemente 5 parallel zu dem durch den Kupplungsstangenstempel 6 verlaufenden Kraftfluss angeordnet sind.

Da hier das Überlastsicherungsglied 10 in Reihe mit dem Kupplungsstangenstempel 6 angeordnet ist, wird bei der Übertragung von Zug- und Stoßkräften der Gesamt-Kraftfluss durch das Überlastsicherungsglied 10 geleitet. In einem Fall, wenn die mit der Übertragung des Krafftflusses durch das Überlastsicherungsglied 10 anfallende Energie den für die Überlastsicherung charakteristischen ersten Energiebetrag überschreitet, spricht die Überlastsicherung an und wird aus dem Kraftübertragungskonzept der Kupplungsvorrichtung 1 im wesentlichen vollständig herausgenommen. Dieser Zustand ist in Fig. 4 gezeigt.

Nach dem Ansprechen der Überlastsicherung 10 wird der relative Abstand zwischen der kupplungskopfseitigen Spannfläche 12 und der wagenkastenseitigen Spannfläche 11, zwischen denen das Überlastsicherungsglied 10 eingespannt ist, verkürzt. Gleichzeitig werden die Energieverzehrelemente 5 zur Kraftübertragung eingesetzt, da nun der Kraftfluss zumindest teilweise über dieser Energieverzehrelemente 5 geleitet wird. Wenn, wie vorstehend erläutert, die mit der Übertragung des erhöhten Kraftflusses durch die Energieverzehrelemente 5 anfallende Energie den für das Ansprechen der Energieverzehrelemente 5 charakteristischen zweiten Energiebetrag überschreitet, kommt es zu einer plastischen Verformung der Energieverzehrelemente 5, infolgedessen die übertragene Energie zumindest teilweise absorbiert bzw. abgebaut wird.

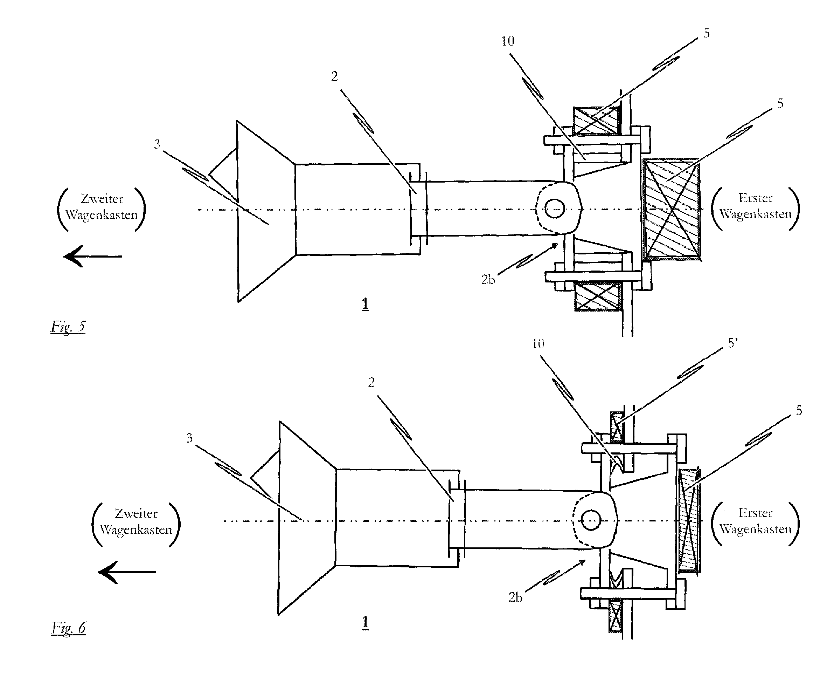

Fig. 5 zeigt in schematischer Ansicht eine dritte bevorzugte Ausführungsform der erfindungsgemäßen Kupplungsvorrichtung 1. Bei dieser Ausführungsform besteht die Kupplungsstange 2 nicht aus einem Kupplungsstangengehäuse 7 und einem Kupplungsstangenstempel 6, der bei Überschreiten der Betriebslast in das Kupplungsstangengehäuse 7 einfährt, wie es zuvor im Zusammenhang mit Fig. 1 bis 4 dargelegt wurde, sondern aus einer im wesentlichen starren Anordnung.

Wie in Fig. 5 angedeutet, läuft bei dieser dritten bevorzugten Ausführungsform der erfindungsgemäßen Kupplungsvorrichtung 1 im normalen Fahrbetrieb der anfallende und zu übertragende Kraftfluss vollständig durch die Kupplungsstange 2. Am wagenkastenseitigen Ende 2b der Kupplungsstange 2 hingegen kann zumindest teilweise eine Aufteilung des Kraftflusses stattfinden. Ein erster Teil des Kraftflusses wird dabei durch die Überlastsicherung 10 geleitet, die in der dargestellten Ausführungsform wieder aus mehreren stabähnlichen Überlastsicherungsgliedern 10 gebildet wird. Alternativ hierzu wäre es selbstverständlich auch möglich, anstelle oder zusätzlich zu diesen stabförmigen Überlastsicherungsgliedern 10 Beulrohre einzusetzen.

Der andere Teil des am wagenkastenseitigen Ende 2b der Kupplungstange 2 gegebenenfalls aufgeteilten Kraftflusses wird über den Lagerbock 4 und gegebenenfalls ein im Fahrzeuguntergestell vorgesehenes Energieverzehrelement 5 zum ersten Wagenkasten übertragen.

Nach Überschreiten der Betriebslast, wenn also die mit der Übertragung des durch die Überlastsicherung 10 fließenden Anteils des Kraftflusses anfallende Energie den für das Ansprechen der Überlastsicherung charakteristischen ersten Energiebetrag überschreitet, verliert die Überlastsicherung ihre Funktion als Übertragungsglied, infolgedessen der Anteil des Kraftflusses, der über das wagenkastenseitige Ende 2b der Kupplungsstange 2, den Lagerbock 4 und das Energieverzehrelement 5 fließt, erhöht wird. Diese Erhöhung des durch das Energieverzehrelement 5 fließenden Kraftflusses bewirkt - mit geeigneter Auslegung des Energieverzehrelementes 5 - ein unmittelbares Ansprechen dieses Energieverzehrelements, was zu einem Energieverzehr führt. Zusätzlich zu dem im Fahrzeuguntergestell vorgesehenen Energieverzehrelement 5 können des Weiteren zusätzliche Energieverzehrelemente 5' parallel zu der Überlastsicherung 10 angeordnet sein, wie es in Fig. 6 gezeigt ist.

Es sei darauf hingewiesen, das die Ausführung der Erfindung nicht auf die in den Figuren 1 bis 6 beschriebenen Ausführungsbeispielen beschränkt ist, sondern auch in einer Vielzahl von Varianten möglich ist. Insbesondere kann die Art und Anordnung der Überlastsicherungsglieder 10 in der Kupplungsvorrichtung 1 verschieden von den dargestellten Anordnungen sein. Allgemein ausgedrückt können die Überlastsicherungsglieder 10 überall im Kraftfluss der von der Kupplungsvorrichtung 1 übertragenen Zug- und Stoßkräfte liegen. Somit ist auch eine Anordnung der Überlastsicherungsglieder 10 am Kupplungskopf 3 oder am Lagerbock 4 denkbar. Ferner wäre es auch denkbar, bei einer der vorstehend beschriebenen Anordnungen, die aus der Überlastsicherung und dem Energieverzehrelement besteht, auch noch ein zusätzliches weiteres Energieverzehrelement vorzusehen, welches beispielsweise in Reihe vor der Überlastsicherung angeordnet ist, und welches vor der Überlastsicherung anspricht. In solch einem Fall wären dann drei (funktional unterschiedliche) Bauelemente vorgesehen, die beispielsweise alle in Reihe oder teilweise in Reihe und teilweise parallel geschaltet sind.

## Patentansprüche

1.  Kupplungsvorrichtung (1) zum Übertragen von Zug- und / oder Stoßkräften zwischen zwei benachbarten Wagenkästen eines mehrgliedrigen Fahrzeuges, insbesondere eines Schienenfahrzeuges, mit:

    - einer Kupplungsstange (2), welche an ihrem ersten Endabschnitt (2a) einen Kupplungskopf (3) aufweist, und welche an ihrem zweiten Endabschnitt (2b) über einen Lagerbock (4) mit einem ersten Wagenkasten vorzugsweise gelenkig verbunden ist, wobei der Kraftfluss bei einer Übertragung von Zug/Stoßkräften von dem ersten Wagenkasten zu einem benachbarten zweiten Wagenkasten durch die Kupplungsstange (2) läuft; und mit
    - zumindest einem Überlastsicherungsglied (10), welches zumindest teilweise in dem über die Kupplungsstange (2) übertragenen Kraftfluss angeordnet ist, und welches ausgelegt ist, bei Überschreiten eines mit dem durch das Überlastsicherungsglied (10) fließenden Kraftfluss übertragenen ersten Energiebetrages anzusprechen und seine Funktion als Kraftübertragungselement zu verlieren, wodurch sich der Kupplungskopf (3) und der erste Wagenkasten relativ aufeinander zubewegen und der Kupplungskopf (3) aus seiner Normalstellung in Richtung des ersten Wagenkastens eingefahren wird,

    **dadurch gekennzeichnet, dass**
    das zumindest eine Überlastsicherungsglied (10) einen stabförmigen Körper mit einer knickgefährdeten Struktur aufweist, welcher derart in der Kupplungsvorrichtung angeordnet ist, dass der durch das zumindest eine Überlastsicherungsglied (10) fließende Kraftfluss im wesentlichen in Längsrichtung des Körpers verläuft, wobei der erste Energiebetrag, bei welchem das Überlastsicherungsglied (10) anspricht, durch eine geeignete Wahl von Geometriekennwerten des Körpers, nämlich durch eine geeignete Wahl der Querschnittskennwerte bzw. Flächenmomente, des Widerstandsmoments und/oder der Länge des Körpers, genau festlegbar und unabhängig von Festigkeitsschwankungen des für den Körper verwendeten Materials ist.

2.  Kupplungsvorrichtung nach Anspruch 1, wobei
    die Kupplungsstange (2) nach dem Ansprechen des zumindest einen Überlastsicherungsgliedes (10) zumindest teilweise aus dem zwischen den benachbarten Wagenkästen übertragenen Kraftfluss genommen wird.

3.  Kupplungsvorrichtung nach Anspruch 2, wobei
    ferner zumindest ein Energieverzehrelement (5), vorzugsweise zumindest ein Seitenpufferelement vorgesehen ist, über welches nach Ansprechen des zumindest einen Überlastsicherungsgliedes (10) zumindest teilweise der zwischen den benachbarten Wagenkästen übertragene Kraftfluss geleitet wird.

4.  Kupplungsvorrichtung nach Anspruch 3, wobei
    das zumindest eine Energieverzehrelement (5) ausgelegt ist, den mit dem durch das Energieverzehrelement (5) fließenden Kraftfluss übertragenen Energiebetrag zumindest teilweise absorbiert und abbaut.

5.  Kupplungsvorrichtung nach einem der vorhergehenden Ansprüche, welche ferner zumindest ein Energieverzehrelement (5) aufweist, welches ausgelegt ist, bei Überschreiten eines mit dem durch das Energieverzehrelement (5) fließenden Kraftfluss übertragenen zweiten Energiebetrages anzusprechen und dabei zumindest einen Teil des durch das Energieverzehrelement (5) übertragenen Energiebetrages zu absorbieren und somit abzubauen, wobei das zumindest eine Überlastsicherungsglied (10) ausgelegt ist, bei Überschreiten des mit dem durch das Überlastsicherungsglied (10) fließenden Kraftfluss übertragenen ersten Energiebetrages anzusprechen und **dadurch** den durch das zumindest eine Energieverzehrelement (5) fließenden Kraftfluss zu erhöhen.

6. Kupplungsvorrichtung nach Anspruch 5, wobei
das zumindest eine Energieverzehrelement (5) derart in der Kupplungsvorrichtung (1) angeordnet ist, dass vor dem Ansprechen des zumindest einen Überlastsicherungsgliedes (10) im wesentlichen kein Kraftfluss über das Energieverzehrelement (5) fließt.

7. Kupplungsvorrichtung nach einem der Ansprüche 3 bis 6, wobei
das zumindest eine Energieverzehrelement (5) und das zumindest eine Überlastsicherungsglied (10) jeweils derart ausgelegt sind, dass das zumindest eine Energieverzehrelement (5) erst bei Ansprechen des zumindest einen Überlastsicherungsgliedes (10) in den über die Kupplungsstange (2) übertragenen Kraftfluss gesetzt wird.

8. Kupplungsvorrichtung nach einem der Ansprüche 3 bis 7, wobei
das zumindest eine Energieverzehrelement (5) hinsichtlich des über die Kupplungsstange (2) übertragenen Kraftflusses zumindest nach Ansprechen des zumindest einen Überlastsicherungsgliedes (10) parallel zu der Kupplungsstange (2) angeordnet ist.

9. Kupplungsvorrichtung nach einem der Ansprüche 3 bis 7, wobei
das zumindest eine Energieverzehrelement (5) hinsichtlich des über die Kupplungsstange (2) übertragenen Kraftflusses zumindest nach Ansprechen des zumindest einen Überlastsicherungsgliedes (10) in Reihe mit der Kupplungsstange (2) angeordnet ist.

10. Kupplungsvorrichtung nach einem der vorhergehenden Ansprüche, wobei
die Wirkungslinie des durch das Überlastsicherungsglied (10) fließenden Kraftflusses in der Stabachse des stabförmigen Körpers liegt.

11. Kupplungsvorrichtung nach Anspruch 10, wobei
der erste Energiebetrag durch eine geeignete Wahl der charakteristischen Knicklast des stabförmigen Körpers festlegbar ist.

12. Kupplungsvorrichtung nach einem der vorhergehenden Ansprüche, wobei
der stabförmige Körper ein hohlzylindrischer, vorzugsweise rohrförmiger Körper ist, und wobei die Wirkungslinie des durch das Überlastsicherungsglied (10) fließenden Kraftflusses in der Mantelfläche des hohlzylindrischen Körpers liegt.

13. Kupplungsvorrichtung nach Anspruch 12, wobei
der erste Energiebetrag durch eine geeignete Wahl der charakteristischen Beullast des hohlzylindrischen Körpers festlegbar ist.

14. Kupplungsvorrichtung nach einem der Ansprüche 10 bis 13, wobei
der erste Energiebetrag, bei welchem das Überlastsicherungsglied (10) anspricht, ferner vorab durch gezieltes Einbringen von Imperfektionen, insbesondere durch Einbringen von Vorverformungen der Stabachse des Überlastsicherungsgliedes (10) und/oder durch Einbringen von Ungleichmäßigkeiten in dem Material des Überlastsicherungsgliedes, einstellbar ist.

15. Kupplungsvorrichtung nach einem der vorhergehenden Ansprüche, wobei
das zumindest eine Überlastsicherungsglied (10) hinsichtlich des über die Kupplungsstange (2) übertragenen Kraftflusses parallel zu der Kupplungsstange (2) angeordnet ist.

16. Kupplungsvorrichtung nach einem der Ansprüche 1 bis 14, wobei
das zumindest eine Überlastsicherungsglied (10) hinsichtlich des über die Kupplungsstange (2) übertragenen Kraftflusses in Reihe mit der Kupplungsstange (2) angeordnet ist.

**Claims**

1. A coupling arrangement (1) for transmitting tractive and/or impact forces between two adjacent car bodies of a multi-member vehicle, in particular a rail vehicle, comprising:

- a coupling rod (2) having a coupling head (3) at its first end section (2a) and which is preferably articulated to a first car body at its second end section (2b) by means of a bearing block (4), wherein the flow of force during the transmission of tractive and/or impact forces runs from the first car body to an adjacent second car body through the coupling rod (2); and comprising
- at least one overload security device (10) arranged at least partly in the flow of force transmitted through the coupling rod (2) and which is designed to respond upon the exceeding of a first amount of energy transmitted in the flow of force running though the overload security device (10) and lose its function as a force transmission element, whereby the coupling head (3) and the first car body move in relative motion toward one another and the coupling head (3) retracts from its normal position toward the first car body,

**characterized in that**
the at least one overload security device (10) exhibits a rod-shaped body having a structure vulnerable to buckling which is arranged within the coupling arrangement such that the flow of force running through the at least one overload security device (10) flows substantially in the longitudinal direction of the body, wherein the first amount of energy at which the overload security device (10) responds can be defined amount of energy at which the overload security device (10) responds can be defined precisely and independently of the variations in resistance respective the material used for the body by the appropriate geometric variables being selected for the body, namely by making the appropriate selection of the cross-sectional characteristics, the moment of area respectively, the moment of resistance, and/or the length of the body.

**2.** The coupling arrangement according to claim 1, wherein
the coupling rod (2) is taken at least partly out of the flow of force transmitted between the adjacent car bodies after the at least one overload security device (10) has been activated.

**3.** The coupling arrangement according to claim 2, wherein
at least one energy-absorbing element (5), preferably at least one side buffer element, is further provided through which at least a portion of the flow of force transmitted between the adjacent car bodies is routed after the at least one overload security device (10) has been activated.

**4.** The coupling arrangement according to claim 3, wherein
the at least one energy-absorbing element (5) is designed to absorb and dissipate at least a portion of the amount of energy transmitted in the flow of force running through said energy-absorbing element (5).

**5.** The coupling arrangement according to any one of the preceding claims further comprising at least one energy-absorbing element (5) which is designed to respond upon the exceeding of a second amount of energy transmitted in the flow of force running through said energy-absorbing element (5) and thereby absorb and thus dissipate at least a portion of the amount of energy transmitted through said energy-absorbing element (5), wherein the at least one overload security device (10) is designed to respond upon the exceeding of the first amount of energy transmitted in the flow of force running through said overload security device (10) and thereby increase the flow of force running through the at least one energy-absorbing element (5).

**6.** The coupling arrangement according to claim 5, wherein
the at least one energy-absorbing element (5) is arranged within the coupling arrangement (1) such that essentially no flow of force runs through said energy-absorbing element (5) prior to the activation of the at least one overload security device (10).

**7.** The coupling arrangement according to any one of claims 3 to 6, wherein
the at least one energy-absorbing element (5) and the at least one overload security device (10) are respectively designed such that the at least one energy-absorbing element (5) does not position in the flow of force transmitted through the coupling rod (2) until the at least one overload security device (10) has been activated.

**8.** The coupling arrangement according to any one of claims 3 to 7, wherein
the at least one energy-absorbing element (5) is arranged parallel to the coupling rod (2) with respect to the flow of force transmitted through said coupling rod (2) at least following activation of the at least one overload security device (10).

**9.** The coupling arrangement according to any one of claims 3 to 7, wherein
the at least one energy-absorbing element (5) is arranged in series with the coupling rod (2) with respect to the flow of force transmitted through said coupling rod (2) at least following activation of the at least one overload security device (10).

**10.** The coupling arrangement according to any one of the preceding claims, wherein
the line of action of the force flow running through the overload security device (10) lies on the longitudinal axis of the rod-shaped body.

**11.** The coupling arrangement according to claim 10, wherein
the first amount of energy can be defined by appropriately selecting the characteristic collapse load for the rod-shaped body.

**12.** The coupling arrangement according to any one of the preceding claims, wherein
the rod-shaped body is a hollow-cylindrical, preferably tubular, body, and wherein the line of action of the force flow running through the overload security device (10) lies on the lateral surface of said hollow-cylindrical body.

**13.** The coupling arrangement according to claim 12, wherein
the first amount of energy can be defined by appropriately selecting the characteristic buckling load for the hollow-cylindrical body.

**14.** The coupling arrangement according to any one of claims 10 to 13, wherein
the first amount of energy at which the overload security device (10) responds can further be preset by the selective incorporating of imperfections, in particular by the incorporating of pre-deformations in the longitudinal axis of overload security device (10) and/or by the incorporating of asymmetries into the material of the overload security device.

**15.** The coupling arrangement according to any one of the preceding claims, wherein
the at least one overload security device (10) is arranged parallel to the coupling rod (2) with respect to the flow of force transmitted through said coupling rod (2).

**16.** The coupling arrangement according to any one of claims 1 to 14, wherein
the at least one overload security device (10) is arranged in series with the coupling rod (2) with respect to the flow of force transmitted through said coupling rod (2).

**Revendications**

**1.** Dispositif d'attelage (1) pour transmettre des forces de traction et/ou des forces par à-coups entre deux caisses de wagons voisines d'un véhicule à plusieurs wagons, en particulier un véhicule ferroviaire, comprenant :

- une barre d'attelage (2) qui comporte une tête d'attelage (3) au niveau de son premier tronçon terminal (2a) et qui est reliée, de préférence de façon articulée, à une première caisse de wagon au niveau de son second tronçon terminal (2b) via un bloc de montage (4) et, lors d'une transmission de forces de traction ou de forces par à-coups depuis la première caisse de wagon vers une seconde caisse de wagon voisine, le flux des forces passe à travers la barre d'attelage (2) ; et comprenant
- au moins un organe de sécurité anti-surcharge (10) qui est agencé au moins partiellement dans le flux des forces transmises via la barre d'attelage (2) et qui est conçu, lors du dépassement d'une première valeur d'énergie transmise avec le flux des forces qui s'écoulent à travers l'organe de sécurité anti surcharge (10), pour réagir et perdre sa fonction à titre d'élément de transmission de force, grâce à quoi la tête d'attelage (3) et la première caisse de wagon se déplacent l'une vers l'autre, et la tête d'attelage (3) est rétractée depuis sa position normale en direction de la seconde caisse de wagon,

**Caractérisé en ce que**
ledit au moins un organe de sécurité anti surcharge (10) présente un corps en forme de barreau avec une structure menacée par des pliages, qui est agencé dans le dispositif d'attelage de telle façon que le flux des forces qui s'écoulent à travers ledit au moins un organe de sécurité anti-surcharge (10) s'écoulent sensiblement en ledit au moins un organe de sécurité anti-surcharge (10) s'écoulent sensiblement en direction longitudinale du corps, la première valeur d'énergie à laquelle l'organe de sécurité anti-surcharge (10) réagit étant déterminable de façon exacte par un choix approprié des valeurs géométriques du corps, à savoir par un choix approprié des valeurs de la section transversale ou des moments surfaciques, du couple de résistance et/ou de la longueur du corps, et est indépendante des fluctuations de solidité du matériau utilisé pour le corps.

**2.** Dispositif d'attelage selon la revendication 1, dans lequel
après réaction dudit au moins un organe de sécurité anti-surcharge (17), la barre d'attelage (2) est au moins partiellement extrait hors du flux des forces transmises entre les caisses de wagon voisines.

**3.** Dispositif d'attelage selon la revendication 2, dans lequel
il est en outre prévu au moins un élément de destruction d'énergie (5), de préférence au moins un élément tampon latéral à travers lequel, après réaction dudit au moins un organe de sécurité anti-surcharge (10), est mené au moins partiellement le flux des forces transmises entre les caisses de wagon voisines.

**4.** Dispositif d'attelage selon la revendication 3, dans lequel
ledit au moins un élément de destruction d'énergie (5) est conçu pour absorber et annuler au moins partiellement la valeur d'énergie transmise avec le flux des forces qui s'écoulent à travers l'élément de destruction d'énergie (5).

**5.** Dispositif d'attelage selon l'une des revendications précédentes, qui comprend en outre au moins un élément de destruction d'énergie (5), lequel est conçu pour réagir lors du dépassement d'une seconde valeur d'énergie transmise avec le flux des forces s'écoulant à travers l'élément de destruction d'énergie (5) et absorber et donc annuler ici au moins une partie de la valeur de l'énergie transmise à travers l'élément de destruction d'énergie (5), et ledit au moins un organe de sécurité anti-surcharge (10) est conçu pour réagir lors d'un dépassement de la première valeur d'énergie transmise avec le flux des forces s'écoulant à travers l'organe de sécurité anti-surcharge (10), et augmenter ainsi le flux des forces qui s'écoulent à travers ledit au moins un élément de destruction d'énergie (5).

**6.** Dispositif d'attelage selon la revendication 5, dans lequel ledit au moins un élément de destruction d'énergie (5) est agencé dans le dispositif d'attelage (1) de telle façon qu'avant la réaction dudit au moins un organe de sécurité anti-surcharge (10), aucune force ne s'écoule sensiblement via l'élément de destruction d'énergie (5).

**7.** Dispositif d'attelage selon l'une des revendications 3 à 6, dans lequel
ledit au moins un élément de destruction d'énergie (5) et ledit au moins un organe de sécurité anti-surcharge (10) sont conçus chacun de telle façon que ledit au moins un élément de destruction d'énergie (5) est mis en service, uniquement lors de la réaction dudit au moins un élément de sécurité anti-surcharge (10), dans le flux des forces transmises via la barre d'attelage (2).

**8.** Dispositif d'attelage selon l'une des revendications 3 à 7, dans lequel
ledit au moins un élément de destruction d'énergie (5) est agencé, pour ce qui concerne le flux des forces transmises via la barre d'attelage (2), au moins après réaction dudit au moins un organe de sécurité anti-surcharge (10), parallèlement à la barre d'attelage (2).

**9.** Dispositif d'attelage selon l'une des revendications 3 à 7, dans lequel
ledit au moins un élément de destruction d'énergie (5) est agencé, pour ce qui concerne le flux des forces transmises via la barre d'attelage (2) en série avec la barre d'attelage (2), au moins après réaction dudit au moins un organe de sécurité anti-surcharge (10).

**10.** Dispositif d'attelage selon l'une des revendications précédentes, dans lequel
la ligne d'action du flux des forces écoulant à travers l'organe de sécurité anti-surcharge (10) se trouve dans l'axe du corps en forme de barreau.

**11.** Dispositif d'attelage selon la revendication 10, dans lequel
la première valeur d'énergie peut être déterminée par un choix approprié de la charge de flambage caractéristique du corps en forme de barreau.

**12.** Dispositif d'attelage selon l'une des revendications précédentes, dans lequel
le corps en forme de barreau est un corps cylindrique creux, de préférence sous forme tubulaire, et dans lequel la ligne d'action du flux des forces s'écoulant à travers l'organe de sécurité anti-surcharge (10) se trouve dans la surface enveloppe du corps cylindrique creux.

**13.** Dispositif d'attelage selon la revendication 12, dans lequel
la première valeur d'énergie peut être déterminée par un choix approprié de la charge de pliage caractéristique du corps cylindrique creux.

**14.** Dispositif d'attelage selon l'une des revendications 10 à 13, dans lequel
la première valeur d'énergie à laquelle l'organe de sécurité anti-surcharge (10) réagit peut en outre être préalablement réglée par introduction ciblée d'imperfections, en particulier par introduction de déformation préalable de l'axe d'un barreau formant l'organe de sécurité anti-surcharge (10) et/ou par introduction d'irrégularités dans le matériau de l'organe de sécurité anti-surcharge.

**15.** Dispositif d'attelage selon l'une des revendications précédentes, dans lequel
ledit au moins un organe de sécurité anti-surcharge (10) est agencé parallèlement à la barre d'attelage (2), pour ce qui concerne le flux des forces transmises via la barre d'attelage (2).

**16.** Dispositif d'attelage selon l'une des revendications 1 à 14, dans lequel
ledit au moins un organe de sécurité anti-surcharge (10) est agencé en série avec la barre d'attelage (2) pour ce qui concerne le flux des forces transmises via la barre d'attelage (2).

Fig. 1

( Zweiter Wagenkasten )

( Erster Wagenkasten )

1  7a  7  5  6a  12  6  10  11  3  4  2  2a  2b

Fig. 2

( Zweiter Wagenkasten )

( Erster Wagenkasten )

1  7  12  5  6a  6  10  11  3  4

Fig. 3

*Zweiter Wagenkasten*

*Erster Wagenkasten*

1  12  10  11  7  6  5  6a  4  3

2  2a  2b

Fig. 4

*Zweiter Wagenkasten*

*Erster Wagenkasten*

1  12  11  7  6  5  6a  4  3  10

EP 1 857 342 B1

$$\begin{pmatrix} \text{Zweiter} \\ \text{Wagenkasten} \end{pmatrix}$$

$$\begin{pmatrix} \text{Erster} \\ \text{Wagenkasten} \end{pmatrix}$$

1

_Fig. 5_

$$\begin{pmatrix} \text{Zweiter} \\ \text{Wagenkasten} \end{pmatrix}$$

$$\begin{pmatrix} \text{Erster} \\ \text{Wagenkasten} \end{pmatrix}$$

1

_Fig. 6_

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005023618 A1
- FR 2775240 A1
- EP 1371539 A1
- CH 452586 A